# EUROPEAN PATENT SPECIFICATION

(11) **EP 4 177 310 B1**
(45) Date of publication and mention of the grant of the patent: **29.10.2025**
(21) Application number: 21833872.1
(22) Date of filing: 10.06.2021
(51) Int. Cl.: C08L 27/06, C08G 63/20, C08G 63/90, C08G 63/16

(54) **VINYL CHLORIDE RESIN PLASTICIZER, VINYL CHLORIDE RESIN COMPOSITION, AND MOLDED ARTICLE THEREOF**
VINYLCHLORIDHARZWEICHMACHER, VINYLCHLORIDHARZZUSAMMENSETZUNG UND FORMARTIKEL DARAUS
AGENT PLASTIFIANT DE RÉSINE DE CHLORURE DE VINYLE, COMPOSITION DE RÉSINE DE CHLORURE DE VINYLE ET ARTICLE MOULÉ ASSOCIÉ

(30) Priority: 02.07.2020 JP 2020114756
(43) Date of publication of application: 10.05.2023
(73) Proprietor: DIC Corporation, Tokyo 174-8520 (JP)
(72) Inventor: NOGUCHI Takafumi, Ichihara-shi, Chiba 290-8585 (JP); TOKORO Hiroki, Ichihara-shi, Chiba 290-8585 (JP); SUZUKI Osamu, Ichihara-shi, Chiba 290-8585 (JP)
(74) Representative: Kraus & Lederer PartGmbB
(86) International application number: PCT/JP2021/022015
(87) International publication number: WO 2022/004320

(56) References cited:
- EP-A1- 0 425 201
- WO-A1-2020/196396
- JP-A- 2012 214 035
- JP-A- H0 366 727
- JP-A- H0 931 173
- JP-A- H09 208 677
- JP-A- H1 045 882
- JP-A- H1 112 529

## Description

### Technical Field

The present invention relates to a plasticizer for a vinyl chloride resin, a vinyl chloride resin composition, and a molded article thereof.

### Background Art

Vinyl chloride resins (PVC) are one of typical plastics and have a wide range of applications because of their inexpensiveness and physical properties including excellent heat resistance. Since vinyl chloride resins are hard and brittle, plasticizers are usually added to make vinyl chloride resins flexible before use.

Higher alkyl esters of polybasic acids such as phthalate esters, adipate esters, and trimellitate esters are known as typical plasticizers used for vinyl chloride resins, and phthalate esters have often been used in terms of the balance between price and performance.

In the applications that require heat resistance and other properties that are not satisfied by phthalate esters, trimellitate esters with heat resistance higher than that of phthalate esters are used (for example, PTL 1). Among those, tri-2-ethylhexyl trimellitate, trinormaloctyl trimellitate, trinormaldecyl trimellitate, triisononyl trimellitate, and triisodecyl trimellitate are plasticizers with extremely high heat resistance and are therefore widely used in heat-resistant wires, automobile wire harnesses and automobile dashboards.

In addition, there are concerns about the adverse effects of phthalate esters on the human body, and there is a demand for developing plasticizers other than phthalate esters. For example, PTL 2 discloses a polyester plasticizer for vinyl chloride resins.

### Citation List

### Patent Literature

PTL 1: Japanese Unexamined Patent Application Publication No. 2016-089155
PTL 2: Japanese Unexamined Patent Application Publication No. H3-66727

### Summary of Invention

### Technical Problem

For plasticizers for vinyl chloride resins used for automobile dashboards and vehicle interior trims, there are increasing demands for non-transfer properties of plasticizers to urethane resins and fogging resistance in which plasticizers do not evaporate from vinyl chloride resins. None of the trimellitate ester plasticizers and the polyester plasticizer above have achieved satisfactory performance.

An object of the present invention is to provide a plasticizer for a vinyl chloride resin with excellent balance of non-transfer properties, fogging resistance, flexibility, heat resistance, and cold resistance.

### Solution to Problem

The inventors of the present invention have conducted elaborate studies to achieve the object above and found that a polyester that contains a certain amount of low molecular weight components while low molecular weight components are reduced is excellent as a plasticizer for a vinyl chloride resin. This finding has led to completion of the present invention.

Specifically, the present invention relates to a plasticizer for a vinyl chloride resin, in which the plasticizer is a polyester made from a glycol having 2 to 18 carbon atoms, an aliphatic dicarboxylic acid having 4 to 14 carbon atoms, and a monoalcohol having 4 to 18 carbon atoms and/or a monocarboxylic acid having 2 to 21 carbon atoms, as reaction raw materials. The polyester has a number average molecular weight in a range of 500 to 6,000 and contains components with a molecular weight of 600 or less in a range of 0.5 to 3.0% by mass in terms of area ratio in gel permeation chromatography measurement.

### Advantageous Effects of Invention

The present invention provides a plasticizer for a vinyl chloride resin with an excellent balance of non-transfer properties, fogging resistance, flexibility, heat resistance, and cold resistance.

### Description of Embodiments

One embodiment of the present invention will be described below. The present invention is not limited to the following embodiments.

### [Plasticizer for Vinyl Chloride Resin]

A plasticizer for a vinyl chloride resin of the present invention is a polyester made from a glycol having 2 to 18 carbon atoms, an aliphatic dicarboxylic acid having 4 to 14 carbon atoms, and a monoalcohol having 4 to 18 carbon atoms and/or a monocarboxylic acid having 2 to 21 carbon atoms, as reaction raw materials, in which the polyester has a number average molecular weight of 500 to 6,000 and contains components with a molecular weight of 600 or less in a range of 0.5 to 3.0% by mass in terms of area ratio in gel permeation chromatography measurement.

The polyester that is the plasticizer for a vinyl chloride resin of the present invention may hereinafter simply be referred to as "the polyester of the present invention".

The polyester of the present invention has a number average molecular weight in a range of 500 to 6,000 and contains components with a molecular weight of 600 or less in a range of 0.5 to 3.0% by mass, thereby improving non-transfer properties and fogging resistance and ensuring flexibility and cold resistance at the same time. The amount of components with a molecular weight of 600 or less in the polyester of the present invention is preferably in a range of 1.0 to 3.0% by mass, more preferably in a range of 1.1 to 2.9% by mass, and more preferably in a range of 1.1 to 2.8% by mass.

For the polyester of the present invention, that the number average molecular weight is in a range of 500 to 6,000 and that the amount of components with a molecular weight of 600 or less is in a range of 0.5 to 3.0% by mass are determined by gel permeation chromatography (GPC) measurement described in Examples.

The polyester of the present invention is a polyester produced using a glycol having 2 to 18 carbon atoms, an aliphatic dicarboxylic acid having 4 to 14 carbon atoms, and a monoalcohol having 4 to 18 carbon atoms and/or a monocarboxylic acid having 4 to 21 carbon atoms, as reaction raw materials.

As used herein "reaction raw materials" means raw materials that constitute the polyester of the present invention, and does not include solvents or catalysts that do not constitute the polyester.

The glycol having 2 to 18 carbon atoms is preferably an alkylene glycol having 2 to 18 carbon atoms or an oxyalkylene glycol having 2 to 18 carbon atoms.

Examples of the alkylene glycol having 2 to 18 carbon atoms include ethylene glycol, 1,2-propylene glycol, 1,3-propylene glycol, 1,2-butanediol, 1,3-butanediol, 1,2-propanediol, 2-methyl-1,3-propanediol, 1,4-butanediol, 1,5-pentanediol, 2,2-dimethyl-1,3-propanediol (neopentyl glycol), 2,2-diethyl-1,3-propanediol (3,3-dimethylolpentane), 2-n-butyl-2-ethyl-1,3-propanediol (3,3-dimethylolheptane), 3-methyl-1,5-pentanediol, 1,6-hexanediol, cyclohexanedimethanol, 2,2,4-trimethyl-1,3-pentanediol, 2-ethyl-1,3-hexanediol, 2-methyl-1,8-octanediol, 1,9-nonanediol, 1,10-decanediol, and 1,12-octadecanediol.

The alkylene glycol having 2 to 18 carbon atoms is preferably an alkylene glycol having 3 to 10 carbon atoms, more preferably an alkylene glycol having 3 to 6 carbon atoms, and even more preferably 1,2-propanediol, 1,3-butanediol, 1,4-butanediol, neopentyl glycol, 2-methyl-1,3-propanediol, 3-methyl-1,5-pentanediol, and 1,6-hexanediol.

The oxyalkylene glycol having 2 to 18 carbon atoms is, for example, the one in which one carbon atom of the alkylene glycol having 2 to 18 carbon atoms is replaced by an oxygen atom, and examples include diethylene glycol, triethylene glycol, tetraethylene glycol, dipropylene glycol, and tripropylene glycol.

The oxyalkylene glycol having 2 to 18 carbon atoms is preferably an oxyalkylene glycol having 3 to 10 carbon atoms, more preferably an oxyalkylene glycol having 4 to 10 carbon atoms, and even more preferably diethylene glycol or triethylene glycol.

The glycols having 2 to 18 carbon atoms, which are a reaction raw material of the polyester of the present invention, may be used singly or in combination of two or more.

The aliphatic dicarboxylic acid having 4 to 14 carbon atoms is preferably an alkylene dicarboxylic acid having 4 to 14 carbon atoms, and more preferably an alkylene dicarboxylic acid having 6 to 12 carbon atoms.

Examples of the alkylene dicarboxylic acid having 4 to 14 carbon atoms include succinic acid, glutaric acid, adipic acid, azelaic acid, sebacic acid, dodecanedicarboxylic acid (dodecanedioic acid), cyclohexanedicarboxylic acid, and hexahydrophthalic acid. Among these, adipic acid, azelaic acid, sebacic acid, and dodecanedioic acid are more preferred, adipic acid and sebacic acid are even more preferred, and adipic acid is particularly preferred.

The alkylene dicarboxylic acids having 4 to 14 carbon atoms, which are a reaction raw material of the polyester of the present invention, may be used singly or in combination of two or more.

The monoalcohol having 4 to 18 carbon atoms is preferably an aliphatic monoalcohol having 4 to 18 carbon atoms.

Examples of the aliphatic monoalcohol having 4 to 18 carbon atoms include butanol, heptanol, hexanol, cyclohexanol, heptanol, octanol, 2-ethyl hexanol, isononyl alcohol, nonanol, decanol, undecanol, and dodecanol.

The monoalcohols having 4 to 18 carbon atoms, which are a reaction raw material of the polyester of the present invention, may be used singly or in combination of two or more.

The monocarboxylic acid having 2 to 21 carbon atoms is preferably an aliphatic monocarboxylic acid having 2 to 21 carbon atoms.

Examples of the aliphatic monocarboxylic acid having 2 to 21 carbon atoms include acetic acid, caproic acid, 2-ethylhexanoic acid, caprylic acid, capric acid, lauric acid, myristic acid, pentadecylic acid, palmitic acid, margaric acid, stearic acid, and arachidic acid.

The monocarboxylic acid having 2 to 21 carbon atoms may be a hydrogenated vegetable oil fatty acid. Examples of the hydrogenated vegetable oil fatty acid include hydrogenated coconut oil fatty acid, hydrogenated palm kernel oil fatty acid, hydrogenated palm oil fatty acid, hydrogenated olive oil fatty acid, hydrogenated castor oil fatty acid, and hydrogenated rapeseed oil fatty acid. These are obtained by decomposing and hydrogenating oils obtained from coconut, palm kernel, palm, olive, castor, and rapeseed and each are a mixture of two or more long-chain aliphatic monocarboxylic acids including aliphatic monocarboxylic acids having 8 to 21 carbon atoms.

The vegetable oil fatty acids may be used without hydrogenation to the extent that the effects of the present invention are not impaired. The vegetable oil fatty acids are not limited to the above.

The polyester of the present invention is made from a glycol having 2 to 18 carbon atoms, an aliphatic dicarboxylic acid having 4 to 14 carbon atoms, and a monoalcohol having 4 to 18 carbon atoms and/or a monocarboxylic acid having 2 to 21 carbon atoms, as reaction raw materials, and other raw materials may be used to the extent that the effects of the present invention are not impaired.

Preferably, the reaction raw materials of the polyester of the present invention substantially include a glycol having 2 to 18 carbon atoms, an aliphatic dicarboxylic acid having 4 to 14 carbon atoms, and a monoalcohol having 4 to 18 carbon atoms and/or a monocarboxylic acid having 2 to 21 carbon atoms, and more preferably exclusively include a glycol having 2 to 18 carbon atoms, an aliphatic dicarboxylic acid having 4 to 14 carbon atoms, and a monoalcohol having 4 to 18 carbon atoms and/or a monocarboxylic acid having 2 to 21 carbon atoms.

The polyester of the present invention includes one or more selected from the group consisting of a mixture of compounds represented by the following formula (1) in which the values of p are different from each other, a mixture of compounds represented by the following formula (2) in which the values of q are different from each other, and a mixture of compounds represented by the following formula (3) in which the values of r are different from each other. 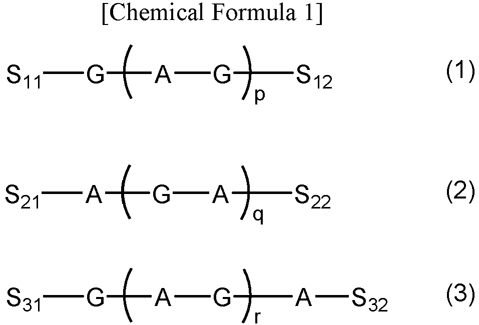 (In the above formulas (1) to (3),
G is a glycol residue having 2 to 18 carbon atoms.
A is an aliphatic dicarboxylic acid residue having 2 to 12 carbon atoms.
S₁₁ and S₁₂ are each independently a monocarboxylic acid residue having 1 to 20 carbon atoms.
S₂₁ and S₂₂ are each independently a monoalcohol residue having 4 to 18 carbon atoms.
S₃₁ is a monocarboxylic acid residue having 1 to 20 carbon atoms.
S₃₂ is a monoalcohol residue having 4 to 18 carbon atoms.
p, q, and r are each independently an integer.)

In the present invention, "carboxylic acid residue" indicates the remaining organic group excluding the carboxyl group of a carboxylic acid. The number of carbon atoms in the "carboxylic acid residue" does not include carbon atoms in the carboxy group.

In the present invention, "alcohol residue" indicates the remaining organic group excluding the hydroxyl group from an alcohol.

In the present invention, "glycol residue" indicates the remaining organic group excluding the hydroxyl group from a glycol.

The glycol residue having 2 to 18 carbon atoms in G is a group corresponding to the glycol having 2 to 18 carbon atoms that is a reaction raw material of the polyester of the present invention.

The aliphatic dicarboxylic acid residue having 2 to 12 carbon atoms in A is a group corresponding to the aliphatic dicarboxylic acid having 4 to 14 carbon atoms that is a reaction raw material of the polyester of the present invention.

The monocarboxylic acid residue having 1 to 20 carbon atoms in S₁₁, S₁₂, and S₃₁ is a group corresponding to the monocarboxylic acid having 2 to 21 carbon atoms that is a reaction raw material of the polyester of the present invention.

The monoalcohol residue having 4 to 18 carbon atoms in S₂₁, S₂₂, and S₃₂ is a group corresponding to the monoalcohol having 4 to 18 carbon atoms that is a reaction raw material of the polyester of the present invention.

The respective upper limits of p, q, and r are, for example, but not limited to, 30.

The average value of p is, for example, in a range of 3 to 20, the average value of q is, for example, in a range of 3 to 20, and the average value of r is, for example, in a range of 3 to 20.

The average values of p, q, and r can be determined from the number average molecular weight of the polyester.

In the polyester of the present invention, preferably, the total of a component with p=0 in the compound represented by formula (1), a component with q=0 in the compound represented by formula (2), and a component with r=0 in the compound represented by formula (3) is in a range of 0.5 to 3.0% by mass in terms of area ratio in gel permeation chromatography measurement.

The number average molecular weight (Mn) of the polyester of the present invention is 500 to 6,000, preferably 1,000 to 5,000, more preferably 1,500 to 4,000, and even more preferably 1,700 to 3,700.

The number average molecular weight (Mn) of the polyester of the present invention is determined by the method described in Examples.

The acid value of the polyester of the present invention is preferably 2.0 or less, and more preferably 1.0 or less.

The hydroxyl value of the polyester of the present invention is preferably 15 or less, and more preferably 10 or less.

The viscosity of the polyester of the present invention is preferably 7,000 mPa·s or less, and more preferably 5,000 mPa·s or less.

The acid value, the hydroxyl value, and the viscosity of the polyester of the present invention are determined by the method described in Examples.

### [Method of Producing Plasticizer for Vinyl Chloride Resin]

The plasticizer for a vinyl chloride resin of the present invention can be produced by synthesizing a polyester by reacting a glycol having 2 to 18 carbon atoms, an aliphatic dicarboxylic acid having 4 to 14 carbon atoms, and a monoalcohol having 4 to 18 carbon atoms and/or a monocarboxylic acid having 4 to 21 carbon atoms, and performing thin-film distillation of the synthesized polyester so that the amount of components with a molecular weight of 600 or less contained in the polyester after thin-film distillation is in a range of 0.5 to 3.0% by mass of the total amount of the polyester after thin-film distillation.

The method of synthesizing a polyester before thin-film distillation is not limited, and the polyester can be produced by any known method and can be produced by the following method.

The polyester represented by the above formula (1) can be obtained, for example, by the following method.

Method 1: A monocarboxylic acid, a dicarboxylic acid, and a glycol that constitute the residues of the polyester represented by formula (1) are prepared in a batch and reacted.

Method 2: A dicarboxylic acid and a glycol that constitute the residues of the polyester represented by formula (1) are reacted under a condition that the equivalent weight of hydroxyl group is larger than the equivalent weight of carboxyl group to produce a polyester having a hydroxyl group at the end of the main chain, and then the resulting polyester resin is reacted with a monocarboxylic acid that constitutes S₁₁ and S₁₂.

The polyester represented by the above formula (2) can be obtained, for example, by the following method.

Method 3: A monoalcohol, a dicarboxylic acid, and a glycol that constitute the residues of the polyester represented by formula (2) are prepared in a batch and reacted.

Method 4: A dicarboxylic acid and a glycol that constitute the residues of the polyester represented by formula (2) are reacted under a condition that the equivalent weight of carboxyl group is larger than the equivalent weight of hydroxyl group to produce a polyester having a carboxyl group at the end of the main chain, and then the resulting polyester is reacted with a monoalcohol that constitutes S₂₁ and S₂₂.

The polyester represented by the above formula (3) can be obtained, for example, by the following method.

Method 4: A monoalcohol, a monocarboxylic acid, a dicarboxylic acid, and a glycol that constitute the residues of the polyester represented by formula (3) are prepared in a batch and reacted.

Method 5: A dicarboxylic acid and a glycol that constitute the residues of the polyester represented by formula (3) are reacted under a condition that the equivalent weight of carboxyl group is equal to the equivalent weight of hydroxyl group to produce a polyester having a carboxyl group and a hydroxyl group at the ends of the main chain, and then the resulting polyester is reacted with a monoalcohol and a monocarboxylic acid that constitute S₃₁ and S₃₂.

In the synthesis of the polyester, the reaction may be esterification reaction in the presence of an esterification catalyst, if necessary, for example, in a temperature range of 180 to 250 °C for 5 to 25 hours.

The conditions including temperature and time for the esterification reaction are not limited and can be set as appropriate.

Examples of the esterification catalyst include titanium-based catalysts such as tetraisopropyl titanate and tetrabutyl titanate; tin-based catalysts such as dibutyl tin oxide; and organic sulfonic acid-based catalysts such as p-toluenesulfonic acid.

The amount of the esterification catalyst may be set as appropriate, but it is usually preferably in a range of 0.001 to 0.1 parts by mass per 100 parts by mass of the total amount of the reaction raw materials.

The thin-film distillation is a distillation method in which an evaporating material is continuously supplied onto a surface heated to a certain temperature under reduced pressure to form a uniform thin film, and the evaporating material is heated only while it is on the surface, so that a component with a relatively low molecular weight instantaneously evaporates, and a component with a relatively high molecular weight is recovered from the surface.

The thin-film distillation of the synthesized polyester can be carried out, for example, using a thin-film distillation device or a thin-film evaporation device. Examples of the thin-film distillation device include flow distillation devices and centrifugal distillation devices, and any of them can be used.

The temperature during thin-film distillation is, for example, in a range of 80 to 280°C, preferably in a range of 150 to 250°C, and more preferably in a range of 180 to 250°C.

The degree of vacuum during thin-film distillation is, for example, in a range of 0.1 to 300 Pa, preferably in a range of 0.1 to 150 Pa, and more preferably in a range of 0.1 to 100 Pa.

The flow rate of thin-film distillation can be increased by setting a low degree of vacuum. The flow rate and the degree of vacuum are balanced so that components with a molecular weight of 600 or less can fall into a range of 0.5 to 3.0% by mass.

### [Vinyl Chloride Resin Composition]

A vinyl chloride resin composition of the present invention contains the plasticizer for a vinyl chloride resin of the present invention and a vinyl chloride resin. In the present invention, the vinyl chloride resin includes a homopolymer of vinyl chloride, a homopolymer of vinylidene chloride, a copolymer with vinyl chloride as an essential component, and a copolymer with vinylidene chloride as an essential component.

When the vinyl chloride resin is a copolymer with vinyl chloride as an essential component or a copolymer with vinylidene chloride as an essential component, examples of a comonomer that can be copolymerized include α-olefins such as ethylene, propylene, and 1-butene; conjugated dienes such as butadiene and isoprene; vinyl alcohol, styrene, acrylonitrile, vinyl acetate, vinyl propionate, fumaric acid, fumarate esters, maleic acid, maleate esters, maleic anhydride, acrylic acid, acrylic acid esters, methacrylic acid, methacrylic acid esters, and isoprenol.

The degree of polymerization of the vinyl chloride resin is usually 300 to 5,000, preferably 400 to 3,500, and more preferably 700 to 3,000. When the degree of polymerization of the vinyl chloride resin is within this range, a molded article with high heat resistance can be produced and a vinyl chloride resin composition with excellent workability can be obtained.

The vinyl chloride resin can be produced by known methods, such as suspension polymerization in the presence of an oil-soluble polymerization catalyst and emulsion polymerization in the presence of a water-soluble polymerization catalyst in an aqueous medium.

Commercially available products can be used as the vinyl chloride resin. Examples of the commercially available products of the vinyl chloride resin include TH-640, TH-700, TH-800 (from Taiyo Vinyl Corporation); S-1004, S-1008, PSH-10 (from KANEKA CORPORATION); TK-700, TK-800, TK-1300 (from Shin-Etsu Polymer Co., Ltd.); and ZEST 800Z, ZEST1000Z, ZEST1300Z (from SHINDAI-ICHI VINYL CORPORATION).

The amount of the plasticizer for a vinyl chloride resin of the present invention in the vinyl chloride resin composition of the present invention is preferably in a range of 10 to 100 parts by mass, more preferably in a range of 30 to 100 parts by mass, even more preferably in a range of 40 to 80 parts by mass, and particularly preferably in a range of 50 to 80 parts by mass per 100 parts by mass of the vinyl chloride resin, in terms of the compatibility with the vinyl chloride resin.

The vinyl chloride resin composition of the present invention contains a vinyl chloride resin and the plasticizer for a vinyl chloride resin of the present invention, and may also contain a plasticizer other than the plasticizer for a vinyl chloride resin of the present invention (other plasticizers), and other additives.

Examples of the other plasticizers include benzoate esters such as diethylene glycol dibenzoate; phthalate esters such as dibutyl phthalate (DBP), di-2-ethylhexyl phthalate (DOP), diisononyl phthalate (DINP), diisodecyl phthalate (DIDP), diundecyl phthalate (DUP), and ditridecyl phthalate (DTDP); terephthalate esters such as bis(2-ethylhexyl) terephthalate (DOTP); isophthalate esters such as bis(2-ethylhexyl) isophthalate (DOIP); pyromellitate esters such as tetra-2-ethylhexyl pyromellitate (TOPM); aliphatic dibasic acid esters such as di-2-ethylhexyl adipate (DOA), diisononyl adipate (DINA), diisodecyl adipate (DIDA), di-2-ethylhexyl sebacate (DOS), and diisononyl sebacate (DINS); phosphate esters such as tri-2-ethylhexyl phosphate (TOP) and tricresyl phosphate (TCP); alkyl esters of polyhydric alcohols such as pentaerythritol; polyesters with a molecular weight of 800 to 4,000 synthesized by polyesterification of dibasic acids such as adipic acid with glycol; epoxidized esters such as epoxidized soybean oil and epoxidized linseed oil; alicyclic dibasic acids such as diisononyl hexahydrophthalate; fatty acid glycol esters such as 1.4-butanediol dicaprate; tributyl acetyl citrate (ATBC); chlorinated paraffins such as chlorinated paraffin wax and n-paraffin; chlorinated fatty acid esters such as chlorinated stearates; and higher fatty acid esters such as butyl oleate.

When the other plasticizers are used in the vinyl chloride resin composition of the present invention, the amount of the other plasticizers is, for example, in a range of 10 to 300 parts by mass, preferably in a range of 20 to 200 parts by mass, per 100 parts by mass of the plasticizer for a vinyl chloride resin of the present invention.

Examples of the other additives include a flame retardant, a stabilizer, a stabilizing aid, a colorant, a processing aid, a filler, an antioxidant (anti-aging agent), a UV absorber, a photostabilizer, a lubricant, an antistatic agent, and a cross-linking aid.

Examples of the flame retardant include inorganic compounds such as aluminum hydroxide, antimony trioxide, magnesium hydroxide, and zinc borate; phosphorus compounds such as cresyl diphenyl phosphate, trischloroethyl phosphate, trischloropropyl phosphate, and trisdichloropropyl phosphate; and halogenated compounds such as chlorinated paraffins.

When a flame retardant is blended in the vinyl chloride resin composition, the amount of the flame retardant is usually in a range of 0.1 to 20 parts by mass per 100 parts by mass of the vinyl chloride resin.

Examples of the stabilizer include metal soap compounds such as lithium stearate, magnesium stearate, magnesium laurate, calcium ricinoleate, calcium stearate, barium laurate, barium ricinoleate, barium stearate, zinc octylate, zinc laurate, zinc ricinoleate, and zinc stearate; organotin compounds such as dimethyltin bis-2-ethylhexyl thioglycolate, dibutyltin maleate, dibutyltin bisbutyl maleate, and dibutyltin dilaurate; antimony mercaptide compounds; and lanthanoid-containing compounds such as lanthanum oxide and lanthanum hydroxide.

When a stabilizer is blended in the vinyl chloride resin composition, the amount of the stabilizer is usually in a range of 0.1 to 20 parts by mass per 100 parts by mass of the vinyl chloride resin.

Examples of the stabilizing aid include phosphite compounds such as triphenyl phosphite, monooctyldiphenyl phosphite, and tridecyl phosphite; beta-diketone compounds such as acetylacetone and benzoylacetone; polyol compounds such as glycerin, sorbitol, pentaerythritol, and polyethylene glycol; perchlorate compounds such as barium perchlorate and sodium perchlorate; hydrotalcite compounds; and zeolites.

When a stabilizing aid is blended in the vinyl chloride resin composition, the amount of the stabilizing aid is usually in a range of 0.1 to 20 parts by mass per 100 parts by mass of the vinyl chloride resin.

Examples of the colorant include carbon black, lead sulfide, white carbon, titanium white, lithopone, iron red, antimony sulfide, chromium yellow, chromium green, cobalt blue, and molybdenum orange.

When a colorant is blended in the vinyl chloride resin composition, the amount of the colorant is usually in a range of 1 to 100 parts by mass per 100 parts by mass of the vinyl chloride resin.

Examples of the processing aid include liquid paraffin, polyethylene wax, stearic acid, stearic acid amide, ethylene bis stearic acid amide, butyl stearate, and calcium stearate.

When a processing aid is blended in the vinyl chloride resin composition, the amount of the processing aid is usually in a range of 0.1 to 20 parts by mass per 100 parts by mass of the vinyl chloride resin.

Examples of the filler include metal oxides such as calcium carbonate, silica, alumina, clay, talc, diatomaceous earth, and ferrite; fibers and powders of glass, carbon, and metal; glass balls, graphite, aluminum hydroxide, barium sulfate, magnesium oxide, magnesium carbonate, magnesium silicate, and calcium silicate.

When a filler is blended in the vinyl chloride resin composition, the amount of the filler is usually in a range of 1 to 100 parts by mass per 100 parts by mass of the vinyl chloride resin.

Examples of the antioxidant include phenolic compounds such as 2,6-di-tertbutylphenol, tetrakis[methylene-3-(3,5-tert-butyl-4-hydroxyphenol)propionate]methane, and 2-hydroxy-4-methoxybenzophenone; sulfur compounds such as alkyl disulfides, thiodipropionates, and benzothiazoles; phosphate compounds such as trisnonylphenyl phosphite, diphenylisodecyl phosphite, triphenyl phosphite, and tris(2,4-di-tert-butylphenyl) phosphite; and organometallic compounds such as zinc dialkyldithiophosphate and zinc diaryldithiophosphate.

When an antioxidant is blended in the vinyl chloride resin composition, the amount of the antioxidant is usually in a range of 0.2 to 20 parts by mass per 100 parts by mass of the vinyl chloride resin.

Examples of the UV absorber include salicylate compounds such as phenyl salicylate and p-tert-butylphenyl salicylate; benzophenone compounds such as 2-hydroxy-4-n-octoxybenzophenone and 2-hydroxy-4-n-methoxybenzophenone; benzotriazole compounds such as 5-methyl-1H-benzotriazole and 1-dioctylaminomethylbenzotriazole, and cyanoacrylate compounds.

When a UV absorber is blended in the vinyl chloride resin composition, the amount of the UV absorber is usually in a range of 0.1 to 10 parts by mass per 100 parts by mass of the vinyl chloride resin.

Examples of the photostabilizer include hindered amine-based photostabilizers. Specific examples include bis(2,2,6,6-tetramethyl-4-piperidyl) sebacate, bis(1,2,2,6,6-pentamethyl-4-piperidyl) sebacate, and methyl 1,2,2,6,6-pentamethyl-4-piperidyl sebacate (mixture), bis(1,2,2,6,6-pentamethyl-4-piperidyl) [[3,5-bis(1,1-dimethylethyl)-4-hydryloxyphenyl]methyl]butylmalonate, decanedioic acid bis(2,2,6,6-tetramethyl-1(octyloxy)-4-piperidyl) ester, and a reaction product of 1,1-dimethylethyl hydroperoxide and octane, 4-benzoyloxy-2,2,6,6-tetramethylpiperidine, an ester mixture of 2,2,6,6-tetramethyl-4-piperidinol and a higher fatty acid, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, a polycondensate of dimethyl succinate and 4-hydroxy-2,2,6,6-tetramethyl-1-piperidineethanol, poly{(6-(1,1,3,3-tetramethylbutyl)amino-1,3,5-triazine-2,4-diyl){(2,2,6,6-tetramethyl-4-piperidyl)imino} hexamethylene f (2,2,6,6-tetramethyl-4-piperidyl)imino}, a polycondensate of dibutylamine-1,3,5-triazine-N,N'-bis(2,2,6,6-tetramethyl-4-piperidyl-1,6-hexamethylenediamine and N-(2,2,6,6-tetramethyl-4-piperidyl)butylamine, and N,N',N",N"'-tetrakis-(4,6-bis-(butyl-(N-methyl-2,2,6,6-tetramethylpiperidin-4-yl)amino)-triazine-2-yl)-4,7-diazadecane-1,10-diamine.

When a photostabilizer is blended in the vinyl chloride resin composition, the amount of the photostabilizer is usually in a range of 0.1 to 10 parts by mass per 100 parts by mass of the vinyl chloride resin.

Examples of the lubricant include silicone, liquid paraffin, paraffin wax, fatty acid metal salts such as metal stearate and metal laurate; fatty acid amides, fatty acid waxes, and higher fatty acid waxes.

When a lubricant is blended in the vinyl chloride resin composition, the amount of the lubricant is usually in a range of 0.1 to 10 parts by mass per 100 parts by mass of the vinyl chloride resin.

Examples of the antistatic agent include alkyl sulfonate-type, alkyl ether carboxylic acid-type, or dialkyl sulfosuccinate-type anionic antistatic agents; nonionic antistatic agents such as polyethylene glycol derivatives, sorbitan derivatives, and diethanolamine derivatives; cationic antistatic agents such as alkylamidoamine-type or alkyldimethylbenzyl-type quaternary ammonium salts, and alkyl pyridinium-type organic acid salts or hydrochlorides; and alkylbetaine-type or alkylimidazoline-type amphoteric antistatic agents.

When an antistatic agent is blended in the vinyl chloride resin composition, the amount of the antistatic agent is usually in a range of 0.1 to 10 parts by mass per 100 parts by mass of the vinyl chloride resin.

Examples of the cross-linking aid include polyfunctional monomers such as tetraethylene glycol dimethacrylate, divinylbenzene diallyl phthalate, triallyl isocyanurate, trimethylol propane triallylate, tetramethylol methane tetramethacrylate, and trimethoxyethoxy vinylsilane. When a cross-linking aid is blended in the vinyl chloride resin composition, the amount of the cross-linking aid is usually in a range of 0.5 to 30 parts by mass per 100 parts by mass of the vinyl chloride resin.

The vinyl chloride resin composition of the present invention can be produced by known methods.

For example, the vinyl chloride resin composition of the present invention can be prepared by mixing a vinyl chloride resin, the plasticizer for a vinyl chloride resin of the present invention, and optional components (the other plasticizers and the other additives described above) using a kneader such as a blender, a planetary mixer, or a Banbury mixer.

The vinyl chloride resin composition of the present invention can be molded by known molding methods such as vacuum molding, compression molding, extrusion, calendering, press forming, blowing, and powder forming to produce a molded article.

The molded article produced using the vinyl chloride resin composition of the present invention can be used for, for example, insulating tapes, insulating sheets, wiring connectors, conductor coating materials, pipes such as water pipes, fittings for pipes, gutters such as rain gutters, window frame sidings, flat plates, corrugated plates, automotive under body coatings, automotive trims such as dashboards, instrument panels, consoles, door sheets, under carpets, trunk sheets, and door trims, various kinds of leather, decorative sheets, agricultural films, food packaging films, various kinds of foam products, hoses, medical tubes, food tubes, refrigerator gaskets, gaskets, wallpaper, floor materials, boots, curtains, shoe soles, gloves, water bars, toys, decorative panels, blood bags, infusion bags, tarpaulins, mats, water shielding sheets, civil engineering sheets, roofing, waterproof sheets, industrial tapes, glass films, and erasers. Examples

The present invention will be described specifically using examples and comparative examples below. However, the present invention is not limited to the following examples.

In the examples of the subject application, the acid value and the value of viscosity are values evaluated by the following methods.

### <Acid Value Measurement Method>

The acid value was measured by a method according to JIS K0070-1992.

### <Viscosity Measurement Method>

The viscosity was measured by a method according to JIS K6901-1986.

In the examples of the subject application, the number average molecular weight of polyester is a value in terms of polystyrene based on GPC measurement, and the measurement conditions are as follows.

### [GPC Measurement Conditions]

Measuring system: High-speed GPC system "HLC-8320GPC" from Tosoh Corporation
Columns: "TSK GURDCOLUMN SuperHZ-L" from Tosoh Corporation + "TSK gel SuperHZM-M" from Tosoh Corporation + "TSK gel SuperHZM-M" from Tosoh Corporation + "TSK gel SuperHZ-2000" from Tosoh Corporation + "TSK gel SuperHZ-2000" from Tosoh Corporation
Detector: RI (differential refractometer)
Data processing: "EcoSEC Data Analysis version 1.07" from Tosoh Corporation
Column temperature: 40°C
Eluent: Tetrahydrofuran
Flow rate: 0.35 mL/min
Measurement sample: 7.5 mg of a sample was dissolved in 10 ml of tetrahydrofuran, and the resulting solution filtered through a microfilter was used as a measurement sample.
Sample injection volume: 20 µl
Standard sample: The following monodisperse polystyrenes with known molecular weights were used in accordance with the measurement manual for "HLC-8320GPC".

### (Monodisperse Polystyrenes)

"A-300" from Tosoh Corporation
"A-500" from Tosoh Corporation
"A-1000" from Tosoh Corporation
"A-2500" from Tosoh Corporation
"A-5000" from Tosoh Corporation
"F-1" from Tosoh Corporation
"F-2" from Tosoh Corporation
"F-4" from Tosoh Corporation
"F-10" from Tosoh Corporation
"F-20" from Tosoh Corporation
"F-40" from Tosoh Corporation
"F-80" from Tosoh Corporation
"F-128" from Tosoh Corporation
"F-288" from Tosoh Corporation

### (Example 1: Synthesis of Polyester Plasticizer A)

In a reaction vessel, 597 g (4.09 mol) of adipic acid, 448 g (3.80 mol) of 3-methyl 1,5-pentanediol, 177 g (1.23 mol) of isononyl alcohol, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. Heating was continued at 230°C until the acid value became 4 or less, and water produced was continuously removed. After the reaction, excess isononyl alcohol was distilled off at 230 to 200°C under reduced pressure, and then the resulting reactant was processed in a thin-film distillation device at 230°C, 30 Pa, and 1.8 kg/hr to produce 905 g of a polyester plasticizer A (Mn 3,288, acid value 0.2, viscosity 3,585 mPa·s (25°C)).

The amount of components with a molecular weight of 600 or less in the resulting polyester plasticizer A was 1.3% by mass in terms of area ratio.

### (Preparation of Vinyl Chloride Resin Composition (1))

A vinyl chloride resin composition (1) was produced by mixing 100 parts by mass of a vinyl chloride resin (degree of polymerization 1,000, ZEST 1000Z, available from SHINDAI-ICHI VINYL CORPORATION), 50 parts by mass of the resulting polyester plasticizer A, and 4 parts by mass of a filler (GLECK MP-677D (calcium/zinc composite stabilizer) available from NISSIN TRADING CO., LTD.). The resulting vinyl chloride resin composition (1) was used in the following evaluations.

### (Evaluation of Plasticizing Performance of Plasticizer)

After the prepared vinyl chloride resin composition (1) was kneaded with two rolls heated to 170°C for 10 minutes, the kneaded vinyl chloride resin composition (1) was formed into a 1.0 mm thick sheet using a die (1.0 mm thick die) that can produce a 1.0 mm thick molded article and a press machine heated to 170°C.

The 100% modulus (tensile stress at 100% elongation) and the elongation at break of the resulting sheet were evaluated according to JISK6251: 2010. Specifically, a tensile test was conducted using the 1.0 mm thick sheet under the following conditions to evaluate the 100% modulus and the elongation at break. The results are listed in Table 1.

The elongation at break is calculated by subtracting the initial distance of 20 mm between chucks from the distance between chucks when the 1.0 mm thick sheet stretched breaks, and dividing the result by the distance of 20 mm between chucks and expressing the result in percentage.
Measuring equipment: Tensilon universal material tester (from ORIENTEC CORPORATION)
Sample shape: Dumbbell shape No. 3
Distance between chucks: 20mm
Tensile speed: 200 mm/min
Measurement atmosphere: temperature 23 degrees, humidity 50%

The lower value of 100% modulus indicates the higher effect of plasticizing the vinyl chloride resin. The higher elongation at break indicates the higher effect of plasticizing the vinyl chloride resin.

### (Evaluation of Heat Resistance Performance of Molded Article)

After the prepared vinyl chloride resin composition (1) was kneaded with two rolls heated to 170°C for 10 minutes, the kneaded vinyl chloride resin composition (1) was formed into a 1.0 mm thick sheet using a die (1.0 mm thick die) that can produce a 1.0 mm thick molded article, and a press machine heated to 170°C. A dumbbell piece with dumbbell shape No. 3 was prepared from the prepared 1.0 mm thick sheet according to JISK6251: 2010.

The prepared dumbbell piece was subjected to a heat aging test at 136°C for 168 hours according to JISK6257: 2017. The masses of the dumbbell piece before and after the heat aging test were measured, and the reduction ratio ((mass before heat aging test - mass after heat aging test)/mass before heat aging test) was calculated. The results are listed in Table 1.

The smaller the reduction ratio is, the more polyester plasticizer A remains in the molded article after the heat aging test, and the heat resistance effect by the polyester plasticizer A can be expected.

The elongation at break of the dumbbell piece after the heat aging test was evaluated in the same manner as in the evaluation of the plasticizing effect, and the elongation of the dumbbell piece after the heat aging test/the elongation of the dumbbell piece before the heat aging test was evaluated as "retention of elongation". The results are listed in Table 1.

The higher the retention of elongation is, the more the plasticizing effect can be retained after the heat aging test, and the vinyl chloride resin composition has excellent heat resistance.

### (Evaluation of Low-Temperature Flexibility of Molded Article)

After the prepared vinyl chloride resin composition (1) was kneaded with two rolls heated to 170°C for 10 minutes, the kneaded vinyl chloride resin composition (1) was formed into a 1.0 mm thick sheet using a die (1.0 mm thick die) that can produce a 1.0 mm thick molded article, and a press machine heated to 170°C.

A test piece was prepared from the resulting sheet according to the test method specified in JISK6773: 2007, and the softening temperature (°C) was evaluated using a Clash-Berg torsion flexibility tester. The results are listed in Table 1. The lower softening temperature indicates excellent cold resistance.

### (Evaluation of Non-Transfer Properties of Plasticizer)

After the prepared vinyl chloride resin composition (1) was kneaded with two rolls heated to 170°C for 10 minutes, the kneaded vinyl chloride resin composition (1) was formed into a 1.0 mm thick sheet using a die (1.0 mm thick die) that can produce a 1.0 mm thick molded article, and a press machine heated to 170°C.

The resulting 1.0 mm thick sheet was punched into a size of 6.0 mm × 38 mm, which was used as a test piece. The test pieces were sandwiched between two acrylonitrile butadiene styrene resin (ABS) plates, between two impact-resistant polystyrene resin (HIPS) plates, between two acrylonitrile styrene resin (AS) plates, and between two polyurethane resin (PU) plates and held under a load of 0.22 kg/cm² at 70°C for 72 hours. The degree of contamination due to transfer of the plasticizer to the ABS plates, the HIPS plates, the AS plates, and the PU plates was visually evaluated based on the following criteria. The results are listed in Table 1.
A: No traces of transfer to the resin plates, or if any, traces can be removed by wiping with ethanol-impregnated gauze.
C: Traces of transfer of the plasticizer are obviously left, and the traces are unable to be removed by wiping with ethanol-impregnated gauze.

### (Evaluation of Compatibility of Plasticizer)

After the prepared vinyl chloride resin composition (1) was kneaded with two rolls heated to 170°C for 10 minutes, the kneaded vinyl chloride resin composition (1) was formed into a 1.0 mm thick sheet using a die (1.0 mm thick die) that can produce a 1.0 mm thick molded article, and a press machine heated to 170°C. Two 1.0 mm thick sheets were prepared by cutting this sheet into a size of 5 cm × 5 cm. The prepared two sheets were stacked and left at 70°C and 95% relative humidity for 30 days. Subsequently, the states of the front surfaces of the sheets and the overlapping surfaces of the sheets were evaluated based on the following evaluation criteria. The results are listed in Table 1.
A: When the front surfaces of the sheets and the overlapping surfaces of the sheets are visually observed, no powdery or viscous foreign matters (bleeding) are observed, and when the front surfaces of the sheets and the overlapping surfaces of the sheets are touched with fingers, no bleeding is observed.
C: When the front surfaces of the sheets and the overlapping surfaces of the sheets are visually observed, bleeding is observed, or when the front surfaces of the sheets and the overlapping surfaces of the sheets are touched with fingers, bleeding is observed.

### (Evaluation of Fogging Resistance of Plasticizer)

The fogging resistance of the polyester plasticizer A was evaluated according to DIN 75201. Specifically, 10 g of the polyester plasticizer A was placed in a glass sample bottle and set in a fogging tester (Horizon Fog Testing System PC-FTS/PC200-A25 from Thermo Scientific) at a temperature adjusted to 100°C. The sample bottle was covered with aluminum foil and then subjected to heat treatment at 100°C for 16 hours. After the heat treatment, the sample bottle was cooled to 21°C and allowed to stand for 4 hours. Fogging resistance was evaluated by the increased weight of the aluminum foil. The results are listed in Table 1.

The lower increased weight indicates excellent fogging resistance.

### (Example 2: Synthesis of Polyester Plasticizer B)

In a reaction vessel, 597 g (4.09 mol) of adipic acid, 265 g (2.25 mol) of 3-methyl 1,5-pentanediol, 80 g (0.77 mol) of neopentyl glycol, 73 g (0.81 mol) of 1,4-butanediol, 114 g (0.88 mol) of 2-ethyl hexanol, 54 g (0.08 mol) of coconut oil, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess 2-ethyl hexanol was distilled off under reduced pressure at 230 to 200°C, and then the resulting product was processed in a thin-film distillation device at 230°C, 30 Pa, and 1.8 kg/hr to produce 898 g of a polyester plasticizer B (Mn 3,137, acid value 0.5, viscosity 3,244 mPa·s (25°C)).

The amount of components with a molecular weight of 600 or less in the resulting polyester plasticizer B was 1.9% by mass.

The coconut oil above is a mixture containing lauric acid (12 carbon atoms) as a main component, octanoic acid (8 carbon atoms), capric acid (10 carbon atoms), myristic acid (14 carbon atoms), palmitic acid (16 carbon atoms), and octadecanoic acid (18 carbon atoms).

A vinyl chloride resin composition (2) was prepared and evaluated in the same manner as in Example 1, except that the plasticizer B was used instead of the plasticizer A. The results are listed in Table 1.

### (Example 3: Synthesis of Polyester Plasticizer C)

In a reaction vessel, 489 g (3.35 mol) of adipic acid, 412 g (3.49 mol) of 3-methyl 1,5-pentanediol, 35 g (0.27 mol) of 2-ethyl hexanol, 222 g (0.33 mol) of coconut oil, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess 2-ethyl hexanol was distilled off under reduced pressure at 230 to 200°C, and then the resulting product was processed in a thin-film distillation device at 230°C, 30 Pa, and 1.8 kg/hr to produce 873 g of a polyester plasticizer C (Mn 3,028, acid value 0.4, viscosity 2,230 mPa·s (25°C)).

The amount of components with a molecular weight of 600 or less in the resulting polyester plasticizer C was 1.8% by mass.

A vinyl chloride resin composition (3) was prepared and evaluated in the same manner as in Example 1, except that the plasticizer C was used instead of the plasticizer A. The results are listed in Table 1.

### (Example 4: Preparation of Polyester Plasticizer D)

In a reaction vessel, 596 g (4.08 mol) of adipic acid, 284 g (2.73 mol) of neopentyl glycol, 61 g (0.68 mol) of 1,4-butanediol, 282 g (2.17 mol) of 2-ethyl hexanol, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess 2-ethyl hexanol was distilled off under reduced pressure at 230 to 200°C, and then the resulting product was processed in a thin-film distillation device at 230°C, 30 Pa, and 1.8 kg/hr to produce 849 g of a polyester plasticizer D (Mn 1,976, acid value 0.3, viscosity 1,578 mPa·s (25°C)).

The amount of components with a molecular weight of 600 or less in the resulting polyester plasticizer D was 2.0% by mass.

A vinyl chloride resin composition (4) was prepared and evaluated in the same manner as in Example 1, except that the plasticizer D was used instead of the plasticizer A. The results are listed in Table 1.

### (Example 5: Synthesis of Polyester Plasticizer E)

In a reaction vessel, 597 g (4.09 mol) of adipic acid, 265 g (2.25 mol) of 3-methyl 1,5-pentanediol, 80 g (0.77 mol) of neopentyl glycol, 73 g (0.81 mol) of 1,4-butanediol, 114 g (0.88 mol) of 2-ethyl hexanol, 54 g (0.08 mol) of coconut oil, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess 2-ethyl hexanol was distilled off under reduced pressure at 230 to 200°C, and then the resulting product was processed in a thin-film distillation device at 230°C, 30 Pa, and 1.5 kg/hr to produce 889 g of a polyester plasticizer E (Mn 3,232, acid value 0.5, viscosity 3,511 mPa·s (25°C)).

The amount of components with a molecular weight of 600 or less in the resulting polyester plasticizer E was 1.2% by mass.

A vinyl chloride resin composition (5) was prepared and evaluated in the same manner as in Example 1, except that the plasticizer E was used instead of the plasticizer A. The results are listed in Table 1.

### (Example 6: Synthesis of Polyester Plasticizer F)

In a reaction vessel, 597 g (4.09 mol) of adipic acid, 265 g (2.25 mol) of 3-methyl 1,5-pentanediol, 80 g (0.77 mol) of neopentyl glycol, 73 g (0.81 mol) of 1,4-butanediol, 114 g (0.88 mol) of 2-ethyl hexanol, 54 g (0.08 mol) of coconut oil, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess 2-ethyl hexanol was distilled off under reduced pressure at 230 to 200°C, and then the resulting product was processed in a thin-film distillation device at 230°C, 30 Pa, and 6.0 kg/hr to produce 902 g of a polyester plasticizer F (Mn 2,944, acid value 0.5, viscosity 3,003 mPa·s (25°C)).

The amount of components with a molecular weight of 600 or less in the resulting polyester plasticizer F was 2.3% by mass.

A vinyl chloride resin composition (6) was prepared and evaluated in the same manner as in Example 1, except that the plasticizer F was used instead of the plasticizer A. The results are listed in Table 1.

### (Example 7: Synthesis of Polyester Plasticizer G)

In a reaction vessel, 597 g (4.09 mol) of adipic acid, 265 g (2.25 mol) of 3-methyl 1,5-pentanediol, 80 g (0.77 mol) of neopentyl glycol, 73 g (0.81 mol) of 1,4-butanediol, 114 g (0.88 mol) of 2-ethyl hexanol, 54 g (0.08 mol) of coconut oil, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess 2-ethyl hexanol was distilled off under reduced pressure at 230 to 200°C, and then the resulting product was processed in a thin-film distillation device at 230°C, 30 Pa, and 7.8 kg/hr to produce 910 g of a polyester plasticizer G (Mn 2,861, acid value 0.5, viscosity 2,915 mPa·s (25°C)).

The amount of components with a molecular weight of 600 or less in the resulting polyester plasticizer G was 2.7% by mass.

A vinyl chloride resin composition (7) was prepared and evaluated in the same manner as in Example 1, except that the plasticizer G was used instead of the plasticizer A. The results are listed in Table 1.

### (Example 8: Synthesis of Polyester Plasticizer H)

In a reaction vessel, 680.3 g (4.66 mol) of adipic acid, 394.2 g (4.38 mol) of 2-methyl 1,3-propanediol, 168.7 g (0.88 mol) of isononyl alcohol, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess isononyl alcohol was distilled off at 230 to 200°C under reduced pressure, and then the resulting product was processed in a thin-film distillation device at 230°C, 30 Pa, and 1.8 kg/hr to produce 872 g of a polyester plasticizer H (Mn 3,331, acid value 0.2, viscosity 6,360 mPa·s (25°C)).

The amount of components with a molecular weight of 600 or less in the resulting polyester plasticizer H was 1.7% by mass.

A vinyl chloride resin composition (8) was prepared and evaluated in the same manner as in Example 1, except that the plasticizer H was used instead of the plasticizer A. The results are listed in Table 1.

### (Example 9: Synthesis of Polyester Plasticizer I)

In a reaction vessel, 584 g (4.0 mol) of adipic acid and 418 g (5.5 mol) of 1,2-propanediol were fed into a four-neck flask with an internal volume of 2 liters equipped with a thermometer, a stirrer, and a reflux condenser. The mixture was heated stepwise to 220°C with stirring under a nitrogen gas stream. Subsequently, 410 g (2.0 mol) of hydrogenated coconut oil hardened fatty acid and 0.1 g of tetraisopropoxy titanium as an esterification catalyst were added, and water produced was continuously removed. After the reaction, followed by distillation under reduced pressure at the same temperature, the resulting reactant was processed in a thin-film distillation device at 230°C, 30 Pa, and 0.6 kg/hr to produce a polyester plasticizer I (Mn 2,160, viscosity 792 mPa·s, acid value 0.3, hydroxyl value 5.6).

The amount of components with a molecular weight of 600 or less in the resulting polyester plasticizer I was 2.9% by mass.

A vinyl chloride resin composition (9) was prepared and evaluated in the same manner as in Example 1, except that the plasticizer I was used instead of the plasticizer A. The results are listed in Table 2.

### (Example 10: Synthesis of Polyester Plasticizer J)

In a reaction vessel, 1,010 g (5.0 mol) of sebacic acid and 396 g (4.4 mol) of 2-methyl-1,3-propanediol were fed into a four-neck flask with an internal volume of 2 liters equipped with a thermometer, a stirrer, and a reflux condenser. The mixture was heated stepwise to 220°C with stirring under a nitrogen gas stream. Subsequently, 317 g (2.2 mol) of isononyl alcohol and 0.1 g of tetraisopropoxy titanium as an esterification catalyst were added, and water produced was continuously removed. After the reaction, followed by distillation under reduced pressure at the same temperature, the resulting reactant was processed in a thin-film distillation device at 230°C, 30 Pa, and 0.6 kg/hr to produce a polyester plasticizer J (Mn 2,172, viscosity 963 mPa·s, acid value 0.2, hydroxyl value 5.2).

The amount of components with a molecular weight of 600 or less in the resulting polyester plasticizer J was 2.8% by mass.

A vinyl chloride resin composition (10) was prepared and evaluated in the same manner as in Example 1, except that the plasticizer J was used instead of the plasticizer A. The results are listed in Table 2.

### (Example 11: Synthesis of Polyester Plasticizer K)

In a reaction vessel, 808 g (4.0 mol) of sebacic acid, 418 g (5.5 mol) of 1,2-propanediol were fed into a four-neck flask with an internal volume of 2 liters equipped with a thermometer, a stirrer, and a reflux condenser. The mixture was heated stepwise to 220°C with stirring under a nitrogen gas stream. Subsequently, 410 g (2.0 mol) of hydrogenated coconut oil fatty acid and 0.1 g of tetraisopropoxy titanium as an esterification catalyst were added, and water produced was continuously removed. After the reaction, followed by distillation under reduced pressure at the same temperature, the resulting reactant was processed in a thin-film distillation device at 230°C, 30 Pa, and 0.6 kg/hr to produce a polyester plasticizer K (Mn 2,125, viscosity 867 mPa·s, acid value 0.2, hydroxyl value 9.0).

The amount of components with a molecular weight of 600 or less in the resulting polyester plasticizer K was 2.9% by mass.

A vinyl chloride resin composition (11) was prepared and evaluated in the same manner as in Example 1, except that the plasticizer K was used instead of the plasticizer A. The results are listed in Table 2.

### (Example 12: Synthesis of Polyester Plasticizer L)

In a reaction vessel, 808 g (4.0 mol) of sebacic acid, 209 g (2.75 mol) of 1,3-propanediol, and 286 g (2.75 mol) of neopentyl glycol were fed into a four-neck flask with an internal volume of 2 liters equipped with a thermometer, a stirrer, and a reflux condenser. The mixture was heated stepwise to 220°C with stirring under a nitrogen gas stream. Subsequently, 400 g (2.0 mol) of lauric acid and 0.1 g of tetraisopropoxy titanium as an esterification catalyst were added, and water produced was continuously removed. After the reaction, followed by distillation under reduced pressure at the same temperature, the resulting reactant was processed in a thin-film distillation device at 230°C, 30 Pa, and 0.6 kg/hr to produce a polyester plasticizer L (Mn 2,262, viscosity 893 mPa·s, acid value 0.4, hydroxyl value 4.9).

The amount of components with a molecular weight of 600 or less in the resulting polyester plasticizer L was 2.7% by mass.

A vinyl chloride resin composition (12) was prepared and evaluated in the same manner as in Example 1, except that the plasticizer L was used instead of the plasticizer A. The results are listed in Table 2.

### (Example 13: Synthesis of Polyester Plasticizer M)

In a reaction vessel, 808 g (4.0 mol) of sebacic acid, 209 g (2.75 mol) of 1,2-propanediol, and 324.5 g (2.75 mol) of 1,6-hexanediol were fed into a four-neck flask with an internal volume of 2 liters equipped with a thermometer, a stirrer, and a reflux condenser. The mixture was heated stepwise to 220°C with stirring under a nitrogen gas stream. Subsequently, 410 g (2.0 mol) of hydrogenated coconut oil fatty acid and 0.1 g of tetraisopropoxy titanium as an esterification catalyst were added, and water produced was continuously removed. After the reaction, followed by distillation under reduced pressure at the same temperature, the resulting reactant was processed in a thin-film distillation device at 230°C, 30 Pa, and 0.6 kg/hr to produce a polyester plasticizer M (Mn 2,437, viscosity 1466 mPa·s, acid value 0.2, hydroxyl value 4.1).

The amount of components with a molecular weight of 600 or less in the resulting polyester plasticizer M was 2.6% by mass.

A vinyl chloride resin composition (13) was prepared and evaluated in the same manner as in Example 1, except that the plasticizer M was used instead of the plasticizer A. The results are listed in Table 2.

### (Comparison Example 1)

A vinyl chloride resin composition (1') was prepared and evaluated in the same manner as in Example 1, except that a plasticizer N (tri-2-ethylhexyl trimellitate, acid value 0.1, viscosity 210 mPa·s (25°C), Monocizer W-705 from DIC Corporation) was used instead of the plasticizer A. The results are listed in Table 3.

### (Comparison Example 2)

A vinyl chloride resin composition (2') was prepared and evaluated in the same manner as in Example 1 except that a plasticizer O (trinormaloctyl trimellitate, acid value 0.1, viscosity 90 mPa·s (25°C), Monocizer W-755 from DIC Corporation) was used instead of the plasticizer A. The results are listed in Table 3.

### (Comparative Example 3: Synthesis of Polyester Plasticizer P)

In a reaction vessel, 597 g (4.09 mol) of adipic acid, 448 g (3.80 mol) of 3-methyl 1,5-pentanediol, 177 g (1.23 mol) of isononyl alcohol, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess isononyl alcohol was distilled off under reduced pressure at 230 to 200°C to produce 965 g of a polyester plasticizer P (Mn 3,048, acid value 0.2, viscosity 3,300 mPa·s (25°C)).

The amount of components with a molecular weight of 600 or less in the resulting polyester plasticizer P was 3.7% by mass.

A vinyl chloride resin composition (3') was prepared and evaluated in the same manner as in Example 1, except that the plasticizer P was used instead of the plasticizer A. The results are listed in Table 3.

### (Comparative Example 4: Synthesis of Polyester Plasticizer Q)

In a reaction vessel, 597 g (4.09 mol) of adipic acid, 265 g (2.25 mol) of 3-methyl 1,5-pentanediol, 80 g (0.77 mol) of neopentyl glycol, 73 g (0.81 mol) of 1,4-butanediol, 114 g (0.88 mol) of 2-ethyl hexanol, 54 g (0.08 mol) of coconut oil, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess 2-ethyl hexanol was distilled off under reduced pressure at 230 to 200°C to produce 944 g of a polyester plasticizer Q (Mn 2,655, acid value 0.5, viscosity 2,614 mPa·s (25°C)).

The amount of components with a molecular weight of 600 or less in the resulting polyester plasticizer Q was 3.7% by mass.

A vinyl chloride resin composition (4') was prepared and evaluated in the same manner as in Example 1, except that the plasticizer Q was used instead of the plasticizer A. The results are listed in Table 3.

### (Comparative Example 5: Synthesis of Polyester Plasticizer R)

In a reaction vessel, 596 g (4.08 mol) of adipic acid, 284 g (2.73 mol) of neopentyl glycol, 61 g (0.68 mol) of 1,4-butanediol, 282 g (2.17 mol) of 2-ethyl hexanol, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess 2-ethyl hexanol was distilled off under reduced pressure at 230 to 200°C to produce 929 g of a polyester plasticizer R (Mn 1,677, acid value 0.2, viscosity 1,033 mPa·s (25°C)).

The amount of components with a molecular weight of 600 or less in the resulting polyester plasticizer R was 7.8% by mass.

A vinyl chloride resin composition (5') was prepared and evaluated in the same manner as in Example 1, except that the plasticizer R was used instead of the plasticizer A. The results are listed in Table 3.

### (Comparative Example 6: Synthesis of Polyester Plasticizer S)

In a reaction vessel, 597 g (4.09 mol) of adipic acid, 265 g (2.25 mol) of 3-methyl 1,5-pentanediol, 80 g (0.77 mol) of neopentyl glycol, 73 g (0.81 mol) of 1,4-butanediol, 114 g (0.88 mol) of 2-ethyl hexanol, 54 g (0.08 mol) of coconut oil, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess 2-ethyl hexanol was distilled off under reduced pressure at 230 to 200°C, and then the resulting product was processed in a thin-film distillation device at 230°C, 30 Pa, and 9.6 kg/hr to produce 926 g of a polyester plasticizer S (Mn 2,793, acid value 0.5, viscosity 2,870 mPa·s (25°C)).

The amount of components with a molecular weight of 600 or less in the resulting polyester plasticizer S was 3.1% by mass.

A vinyl chloride resin composition (6') was prepared and evaluated in the same manner as in Example 1, except that the plasticizer S was used instead of the plasticizer A. The results are listed in Table 3.

### (Comparative Example 7: Synthesis of Polyester Plasticizer T)

In a reaction vessel, 597 g (4.09 mol) of adipic acid, 265 g (2.25 mol) of 3-methyl 1,5-pentanediol, 80 g (0.77 mol) of neopentyl glycol, 73 g (0.81 mol) of 1,4-butanediol, 114 g (0.88 mol) of 2-ethyl hexanol, 54 g (0.08 mol) of coconut oil, and 0.06 g of tetraisopropyl titanate as an esterification catalyst were fed into a four-neck flask with an internal volume of 2 liters equipped with a thermometer, a stirrer, and a reflux condenser. The mixture was heated stepwise to 230°C with stirring under a nitrogen gas stream. The heating was continued at 230°C until the acid value became 4 or less, and water produced was continuously removed. After the reaction, excess 2-ethyl hexanol was distilled off under reduced pressure at 230 to 200°C, and then the resulting product was processed in a thin-film distillation device at 230°C, 0.05 Pa, and 0.4 kg/hr to produce 847 g of a polyester plasticizer T (Mn 3,766, acid value 0.2, viscosity 4,173 mPa·s (25°C)).

The amount of components with a molecular weight of 600 or less in the resulting polyester plasticizer T was 0.1% by mass or less.

A vinyl chloride resin composition (7') was prepared and evaluated in the same manner as in Example 1, except that the plasticizer T was used instead of the plasticizer A. The results are listed in Table 3.

**[Table 1]**

| | | Example 1 | Example 2 | Example 3 | Example 4 | Example 5 | Example 6 | Example 7 | Example 8 |
|---|---|---|---|---|---|---|---|---|---|
| Plasticizing effect | 100% Modulus [Mpa] | 13.1 | 13.9 | 12.6 | 13.2 | 14.0 | 13.8 | 13.5 | 13.5 |
| | Elongation [%] | 332 | 336 | 334 | 330 | 334 | 336 | 338 | 345 |
| Heat resistance | Heat aging reduction [%] | 1.1 | 1.4 | 1.3 | 1.8 | 1.0 | 1.7 | 1.9 | 1.4 |
| | Retention of elongation [%] | 99 | 99 | 98 | 98 | 99 | 97 | 97 | 98 |
| Cold resistance | Low-temperature softening temperature [°C] | -12 | -11 | -15 | -8 | -10 | -12 | -13 | -6 |
| Non-transfer properties | ABS | A | A | A | A | A | A | A | A |
| | HIPS | A | A | A | A | A | A | A | A |
| | AS | A | A | A | A | A | A | A | A |
| | PU | A | A | A | A | A | A | A | A |
| Compatibility | | A | A | A | A | A | A | A | A |
| Fogging resistance [mg] | | 0.18 | 0.38 | 0.33 | 0.35 | 0.20 | 0.53 | 0.94 | 0.27 |

**[Table 2]**

| | | Example 9 | Example 10 | Example 11 | Example 12 | Example 13 |
|---|---|---|---|---|---|---|
| Plasticizing effect | 100% Modulus [Mpa] | 12.5 | 12.4 | 11.8 | 12.6 | 11.9 |
| | Elongation [%] | 335 | 338 | 342 | 337 | 339 |
| Heat resistance | Heat aging reduction [%] | 2.4 | 2.3 | 2.1 | 1.9 | 1.7 |
| | Retention of elongation [%] | 97 | 97 | 99 | 98 | 99 |
| Cold resistance | Low-temperature softening temperature [°C] | -14 | -16 | -17 | -18 | -22 |
| Non-transfer properties | ABS | A | A | A | A | A |
| | HIPS | A | A | A | A | A |
| | AS | A | A | A | A | A |
| | PU | A | A | A | A | A |
| Compatibility | | A | A | A | A | A |
| Fogging resistance [mg] | | 1.55 | 1.03 | 1.20 | 0.92 | 0.82 |

**[Table 3]**

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Plasticizing effect | 100% Modulus [Mpa] | 13.0 | 12.1 | 12.9 | 13.9 | 12.9 | 14.1 | 14.6 |
| | Elongation [%] | 348 | 363 | 334 | 334 | 331 | 330 | 338 |
| Heat resistance | Heat aging reduction [%] | 3.4 | 1.6 | 2.4 | 2.6 | 5.5 | 2.2 | 0.5 |
| | Retention of elongation [%] | 81 | 96 | 99 | 98 | 95 | 99 | 99 |
| Cold resistance | Low-temperature softening temperature [°C] | -15 | -26 | -13 | -13 | -11 | -11 | -2 |
| Non-transfer properties | ABS | A | A | A | A | A | A | A |
| | HIPS | C | C | A | A | B | A | A |
| | AS | C | C | A | A | B | A | A |
| | PU | C | C | A | A | B | A | A |
| Compatibility | | A | A | A | A | A | A | A |
| Fogging resistance [mg] | | 0.08 | 0.07 | 2.70 | 2.72 | 5.41 | 1.84 | 0.05 |

Tables 1 to 3 indicated that the trimellitate ester plasticizers of Comparative Examples 1 and 2 did not provide non-transfer properties. It was also found that the polyester plasticizers of Comparative Examples 3 to 6, in which the amount of components with a molecular weight of 600 or less exceeded 3.0% by mass, did not provide fogging resistance, and the polyester plasticizer of Comparative Example 7, in which the amount of components with a molecular weight of 600 or less was less than 0.5% by mass, did not provide cold resistance.

## Claims

1. A plasticizer for a vinyl chloride resin, the plasticizer being a polyester made from a glycol having 2 to 18 carbon atoms, an aliphatic dicarboxylic acid having 4 to 14 carbon atoms, and a monoalcohol having 4 to 18 carbon atoms and/or a monocarboxylic acid having 2 to 21 carbon atoms, as reaction raw materials,
wherein
the polyester has a number average molecular weight in a range of 500 to 6,000 and contains components with a molecular weight of 600 or less in a range of 0.5 to 3.0% by mass in terms of area ratio in gel permeation chromatography measurement;
wherein the number average molecular weight of the polyester is a value in terms of polystyrene based on gel permeation chromatography measurement, measured under the conditions indicated in the description.

2. The plasticizer for a vinyl chloride resin according to claim 1, wherein the aliphatic dicarboxylic acid having 4 to 14 carbon atoms is one or more selected from the group consisting of adipic acid and sebacic acid.

3. The plasticizer for a vinyl chloride resin according to claim 1, wherein the glycol having 2 to 18 carbon atoms is one or more selected from the group consisting of 1,2-propanediol, 1,3-butanediol, 1,4-butanediol, neopentyl glycol, 2-methyl-1,3-propanediol, 3-methyl-1,5-pentanediol, and 1,6-hexanediol.

4. The plasticizer for a vinyl chloride resin according to claim 1, wherein the monoalcohol having 4 to 18 carbon atoms is one or more selected from the group consisting of octanol, 2-ethyl hexanol, and isononyl alcohol.

5. The plasticizer for a vinyl chloride resin according to claim 1, wherein the monocarboxylic acid having 4 to 21 carbon atoms is one or more selected from the group consisting of 2-ethylhexanoic acid, hydrogenated coconut oil fatty acid, and lauric acid.

6. The plasticizer for a vinyl chloride resin according to any of claims 1 to 5, wherein the polyester has a number average molecular weight in a range of 1,500 to 4,000.

7. A method of producing a plasticizer for a vinyl chloride resin, the method comprising:
synthesizing a polyester by reacting a glycol having 2 to 18 carbon atoms, an aliphatic dicarboxylic acid having 4 to 14 carbon atoms, and a monoalcohol having 4 to 18 carbon atoms and/or a monocarboxylic acid having 4 to 21 carbon atoms; and
performing thin-film distillation of the polyester, the polyester after thin-film distillation containing components with a molecular weight of 600 or less in a range of 0.5 to 3.0% by mass in terms of area ratio in gel permeation chromatography measurement;
wherein the number average molecular weight of the polyester is a value in terms of polystyrene based on gel permeation chromatography measurement, measured under the conditions indicated in the description.

8. A vinyl chloride resin composition comprising:
the plasticizer for a vinyl chloride resin according to any of claims 1 to 6; and
a vinyl chloride resin.

9. The vinyl chloride resin composition according to claim 8, wherein the amount of the plasticizer for a vinyl chloride resin is in a range of 10 to 100 parts by mass per 100 parts by mass of the vinyl chloride resin.

10. A molded article of the vinyl chloride resin composition according to claim 8 or 9.

## Patentansprüche

1. Weichmacher für ein Vinylchloridharz, wobei der Weichmacher ein Polyester ist, der aus einem Glykol mit 2 bis 18 Kohlenstoffatomen, einer aliphatischen Dicarbonsäure mit 4 bis 14 Kohlenstoffatomen und einem Monoalkohol mit 4 bis 18 Kohlenstoffatomen und/oder einer Monocarbonsäure mit 2 bis 21 Kohlenstoffatomen als Reaktionsrohstoffen hergestellt ist, wobei
der Polyester ein zahlenmittleres Molekulargewicht im Bereich von 500 bis 6000 aufweist und Komponenten mit einem Molekulargewicht von 600 oder weniger in einem Bereich von 0,5 bis 3,0 Massenprozent, bezogen auf das Flächenverhältnis in der Gelpermeationschromatographie-Messung, enthält;
wobei das zahlenmittlere Molekulargewicht des Polyesters ein Wert in Bezug auf Polystyrol ist, basierend auf einer Gelpermeationschromatographie-Messung, gemessen unter den in der Beschreibung angegebenen Bedingungen.

2. Weichmacher für ein Vinylchloridharz gemäß Anspruch 1, wobei die aliphatische Dicarbonsäure mit 4 bis 14 Kohlenstoffatomen eine oder mehrere, ausgewählt aus der Gruppe bestehend aus Adipinsäure und Sebacinsäure, ist.

3. Weichmacher für ein Vinylchloridharz gemäß Anspruch 1, wobei das Glykol mit 2 bis 18 Kohlenstoffatomen eines oder mehrere, ausgewählt aus der Gruppe bestehend aus 1,2-Propandiol, 1,3-Butandiol, 1,4-Butandiol, Neopentylglykol, 2-Methyl-1,3-propandiol, 3-Methyl-1,5-pentandiol und 1,6-Hexandiol, ist.

4. Weichmacher für ein Vinylchloridharz gemäß Anspruch 1, wobei der Monoalkohol mit 4 bis 18 Kohlenstoffatomen einer oder mehrere, ausgewählt aus der Gruppe bestehend aus Octanol, 2-Ethylhexanol und Isononylalkohol, ist.

5. Weichmacher für ein Vinylchloridharz gemäß Anspruch 1, wobei die Monocarbonsäure mit 4 bis 21 Kohlenstoffatomen eine oder mehrere, ausgewählt aus der Gruppe bestehend aus 2-Ethylhexansäure, hydrierter Kokosnussölfettsäure und Laurinsäure, ist.

6. Weichmacher für ein Vinylchloridharz gemäß einem der Ansprüche 1 bis 5, wobei der Polyester ein zahlenmittleres Molekulargewicht im Bereich von 1.500 bis 4.000 aufweist.

7. Verfahren zur Herstellung eines Weichmachers für ein Vinylchloridharz, wobei das Verfahren umfasst:
Synthese eines Polyesters durch Umsetzung eines Glykols mit 2 bis 18 Kohlenstoffatomen, einer aliphatischen Dicarbonsäure mit 4 bis 14 Kohlenstoffatomen und eines Monoalkohols mit 4 bis 18 Kohlenstoffatomen und/oder einer Monocarbonsäure mit 4 bis 21 Kohlenstoffatomen; und
Durchführen einer Dünnschichtdestillation des Polyesters, wobei der Polyester nach der Dünnschichtdestillation Komponenten mit einem Molekulargewicht von 600 oder weniger in einem Bereich von 0,5 bis 3,0 Massenprozent, bezogen auf das Flächenverhältnis in der Gelpermeationschromatographie-Messung, enthält;
wobei das zahlenmittlere Molekulargewicht des Polyesters ein Wert in Bezug auf Polystyrol ist, basierend auf einer Gelpermeationschromatographie-Messung, gemessen unter den in der Beschreibung angegebenen Bedingungen.

8. Vinylchloridharzzusammensetzung, umfassend:
den Weichmacher für ein Vinylchloridharz gemäß einem der Ansprüche 1 bis 6; und
ein Vinylchloridharz.

9. Vinylchloridharzzusammensetzung gemäß Anspruch 8, wobei die Menge des Weichmachers für ein Vinylchloridharz in einem Bereich von 10 bis 100 Masseteilen pro 100 Masseteile des Vinylchloridharzes liegt.

10. Formkörper aus der Vinylchloridharzzusammensetzung gemäß Anspruch 8 oder 9.

## Revendications

1. Plastifiant pour une résine de chlorure de vinyle, le plastifiant étant un polyester fabriqué à partir d'un glycol ayant 2 à 18 atomes de carbone, d'un acide dicarboxylique aliphatique ayant 4 à 14 atomes de carbone et d'un monoalcool ayant 4 à 18 atomes de carbone et/ou d'un acide monocarboxylique ayant 2 à 21 atomes de carbone, en tant que matières premières de réaction, dans lequel
le polyester a un poids moléculaire moyen en nombre compris entre 500 et 6 000 et contient des composants ayant un poids moléculaire inférieur ou égal à 600 dans une plage de 0,5 à 3,0% en masse en termes de rapport de surface dans la mesure par chromatographie par perméation de gel ;
dans lequel le poids moléculaire moyen en nombre du polyester est une valeur exprimée en polystyrène sur la base d'une mesure par chromatographie par perméation de gel, mesurée dans les conditions indiquées dans la description.

2. Plastifiant pour une résine de chlorure de vinyle selon la revendication 1, dans lequel l'acide dicarboxylique aliphatique ayant 4 à 14 atomes de carbone est un ou plusieurs choisis dans le groupe constitué par l'acide adipique et l'acide sébacique.

3. Plastifiant pour une résine de chlorure de vinyle selon la revendication 1, dans lequel le glycol ayant 2 à 18 atomes de carbone est un ou plusieurs choisis dans le groupe constitué par le 1,2-propanediol, le 1,3-butanediol, le 1,4-butanediol, le néopentylglycol, le 2-méthyl-1,3-propanediol, le 3-méthyl-1,5-pentanediol et le 1,6-hexanediol.

4. Plastifiant pour une résine de chlorure de vinyle selon la revendication 1, dans lequel le monoalcool ayant 4 à 18 atomes de carbone est un ou plusieurs choisis parmi le groupe constitué par l'octanol, le 2-éthylhexanol et l'alcool isononylique.

5. Plastifiant pour une résine de chlorure de vinyle selon la revendication 1, dans lequel l'acide monocarboxylique ayant 4 à 21 atomes de carbone est un ou plusieurs choisis dans le groupe constitué par l'acide 2-éthylhexanoïque, l'acide gras d'huile de noix de coco hydrogénée et l'acide laurique.

6. Plastifiant pour une résine de chlorure de vinyle selon l'une quelconque des revendications 1 à 5, dans lequel le polyester a un poids moléculaire moyen en nombre compris entre 1 500 et 4 000.

7. Procédé de production d'un plastifiant pour une résine de chlorure de vinyle, le procédé comprenant :
la synthèse d'un polyester par réaction d'un glycol ayant 2 à 18 atomes de carbone, d'un acide dicarboxylique aliphatique ayant 4 à 14 atomes de carbone et d'un monoalcool ayant 4 à 18 atomes de carbone et/ou d'un acide monocarboxylique ayant 4 à 21 atomes de carbone ; et
effectuer une distillation en couche mince du polyester, le polyester après distillation en couche mince contenant des composants ayant un poids moléculaire de 600 ou moins dans une plage de 0,5 à 3,0% en masse en termes de rapport de surface dans la mesure par chromatographie par perméation de gel ;
dans lequel le poids moléculaire moyen en nombre du polyester est une valeur exprimée en polystyrène sur la base d'une mesure par chromatographie par perméation de gel, mesurée dans les conditions indiquées dans la description.

8. Composition de résine de chlorure de vinyle comprenant :
le plastifiant pour une résine de chlorure de vinyle selon l'une quelconque des revendications 1 à 6 ; et
une résine de chlorure de vinyle.

9. Composition de résine de chlorure de vinyle selon la revendication 8, dans laquelle la quantité de plastifiant pour une résine de chlorure de vinyle est comprise dans une plage de 10 à 100 parties en masse pour 100 parties en masse de la résine de chlorure de vinyle.

10. Article moulé de la composition de résine de chlorure de vinyle selon la revendication 8 ou 9.
